# EUROPEAN PATENT APPLICATION

(11) **EP 1 579 761 A1**
(43) Date of publication of application: **28.09.2005**
(21) Application number: 05102208.5
(22) Date of filing: 21.03.2005
(51) Int. Cl.: A01K 3/00

(54) **Arrangement for activating an automatic feed dispenser**

(30) Priority: 24.03.2004 SE 0400767
(71) Applicant: Swedish Control System Aktiebolag, 662 34 Amal (SE)
(72) Inventor: Olsson, Johan, 662 91 AmaL (SE)
(74) Representative: Johansson, Lars E.

(57) **Abstract**

It is the object of the invention to be able at a predetermined point of time to activate one or more automatic feed dispensers. The invention comprises an electromagnetic actuator (L1) that is able to activate the automatic feed dispenser, connected to a control unit (K), c h a r a c t e r i z e d i n that via a connection to an electric fence (F), it gathers information about activation timing, and is also provided with the ability to extract the power required for activation of the actuator (L1).

## Description

The present invention relates to an arrangement for activating an automatic feed dispenser for grazing animals, preferably horses, in electric fenced pastures, in which automated feeding is desired in one or more locations at a predetermined point of time, a system being used having an actuator and a control unit for activation of automatic feed dispensers.

### PRIOR ART

It is known from e.g. US 20020134313 that automatic feed dispensers can be triggered by a system of so called ID tags, in which each animal can be identified by a detection system integrated in the feed dispenser, whereby feeding time conditions for any given animal can be introduced. This system is considerably more complicated than the arrangement according to the present invention, and hence they are not comparable.

US 200330070622 discloses an automatic feed system in which a feed dispensing carriage for a plurality of different feed types moves along a track and is preprogrammable to produce different formulas at different positions along the track. This system too is considerably more complicated than the arrangement according to the present invention, and hence they are not comparable.

### BRIEF ACCOUNT OF THE INVENTION

It is the object of the invention to be able at a predetermined point of time to activate one or more automatic feed dispensers. The object is achieved by the arrangement according to the invention as defined in Claim 1.

By the arrangement according to the invention, a number of problems associated with the feeding of grazing animals are solved, without requiring the large investments that are usually associated with automatic feed dispensing. In the case that several animals are in the same enclosed pasture a competitive situation usually arises in respect of the feed, requiring both that the feed is subdivided into equal numbers of rations as the number of animals, and that the feeding takes place simultaneously, which is solved by the arrangement according to the invention by it being able to synchronize several physically separated units without requiring costly installing of cables, radio links etc. The invention makes use of existing electric fences and electric units, both as information carriers in respect of feeding times, and as power sources. The electric unit is connected via a timer that cuts the current for about 30 seconds as activation is to take place. A control unit detects this loss of "sparks", and activates the actuator.
The timer is of standard type and hence it is not costly nor does it require special installation.

Other advantages of the invention are evident from the description below of embodiment examples.

### SHORT DESCRIPTION OF THE DRAWINGS

The description of embodiment examples refers to the drawings, of which:
- Fig. 1: shows a principal set-up having two automatic feeding dispensers.
- Fig. 2: shows a circuit diagram of one embodiment of the arrangement according to the invention.

### DESCRIPTION OF EMBODIMENT EXAMPLES

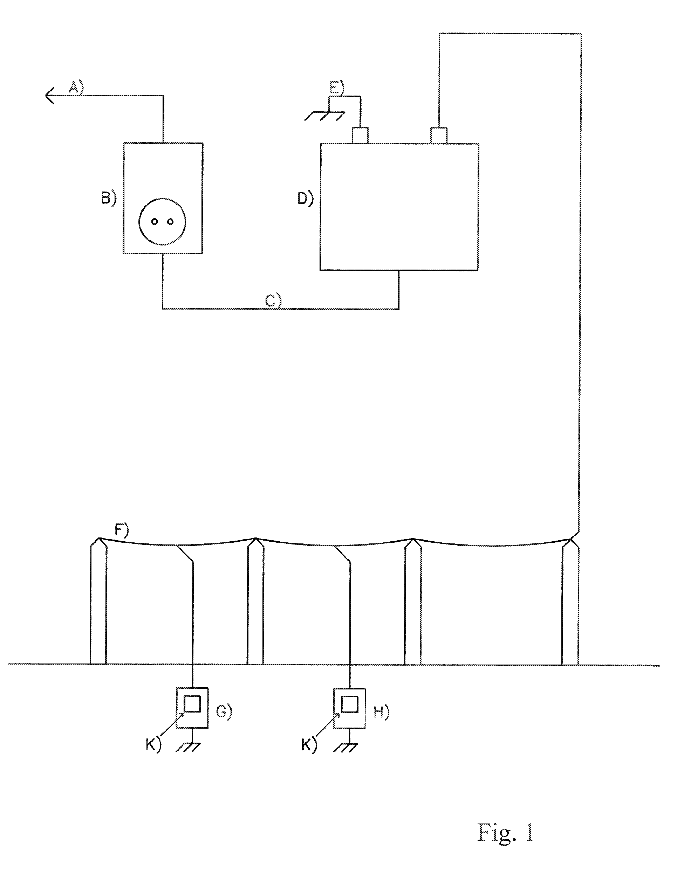

Fig. 1 shows a connection example in which an electric unit (D) is connected by the ordinary 230 VAC plug (C) to a timer unit (B) connected to an ordinary 230 VAC outlet (A). The high-voltage outlet from unit (D) is connected to an electric fence (F) and to ground (E). An ordinary electric unit gives pulses of 2.8 kV depending on load. The load is usually caused by grass, moisture etc. The pulses have a repetition frequency of about 1 Hz. The arrangement (G, H) according to the invention, with its control unit (K) and actuator (not shown), is electrically connected to the electric fence (F) by a clamp and cable adapted therefore, and is grounded quite simply by the automatic feed dispenser standing on the ground. The resulting pulse voltage (2.8 kV) is used to operate the arrangement and to activate the automatic feed dispenser. The design of the automatic feed dispenser is essentially not described in the present application, since a variety of different types exists and most of them can be adapted to be activated by aid of the arrangement according to the invention, by appropriate choice of actuator.

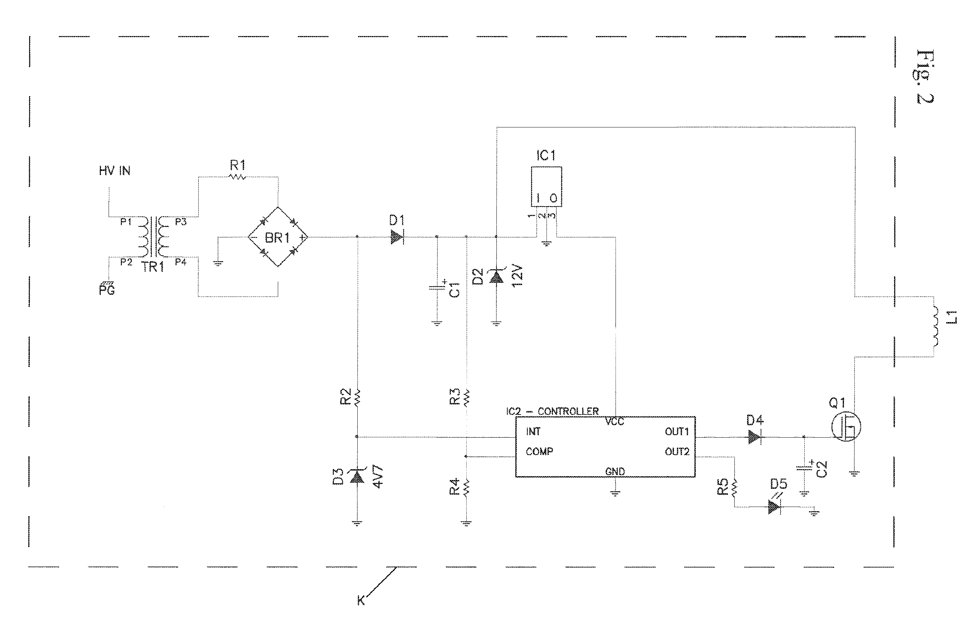

Fig. 2 is an example of an electric circuit diagram describing a possible operation of the arrangement according to the invention, and its control unit (K) and actuator (L). By an appropriate cable, the electric fence is connected to (HV IN) that is connected to the high-voltage winding of a transformer (P1 - TR1). The second leg (P2 - TR1) of the high-voltage winding is grounded (PG) via the chassis or stand of the automatic feed dispenser. Hence, the power of each pulse from the electric unit (D) will, via this transformer, be transformed down to suitable levels on the secondary winding (P3, P4 - TR1) (about 10-12 V). A current limiting resistor (R1) minimizes the risk of damages in connection with extreme input voltages caused by lightning strike. The rectifier bridge BR1 is necessary in case the polarity of the pulse from the electric unit is unknown, and causes a rectification of the pulse. A capacitor (C1) is charged via diode (D1), to the level determined by the Zener-diode (D2). This process takes about 10-100 pulses depending on pulse power available from the electric unit, when the capacitor is 1000 µF and D2 = 12 V. In other words, a charging time of about 10-100 seconds is required before the arrangement is ready to be activated. These data have been measured in practical tests in enclosed pastures of very varying qualities in respect of both fences and electric units. A micro controller (IC2), fed from the voltage regulator (IC1), is used to perform the conditions that lead to activation, according to the following:
As a voltage of more than 10 VDC is detected via R3 and R4 connected to the comparator inlet (COMP) of (IC2), the arrangement is primed, i.e. ready to activate the actuator (L1). This mode is characterized by a diode lamp (D5) flashing with short pulses, and by monitoring the frequency of incoming transients from the electric unit (D), via R2 and D3 connected to the inlet INT of (IC2). When such incoming transients cease for more than about 10 seconds, in order thereafter to return before the voltage level of (C1) falls below 10 V, the actuator is activated via D4, C2 and Q1. This coupling (D4, C2) ensures that (Q2) remains activated until all the power of the capacitor (C1) has been discharged via the actuator (L1). This strategy allows for other shutting off of the electric unit, without activating feeding. In other words, brief interruptions of less than 10 seconds will not result in activation, and long interruptions of more than about 1 minute will not result in activation, but an adapted interruption of about 30 seconds and generated by the timer (B), will result in a safe activation. All times and data given above are approximate and may be varied without departing from the concept of the arrangement according to the invention.

It is also realized that more complex conditions for activation can be achieved by the controller (IC2), whereby different control units can be responsive to different lengths of pulse interruptions e.g., which allows for selective activation of different groups of control units.

By using a high-voltage transformer to connect to the electric fence, the connection can take place without appreciable loading of the pulse power in the fence. Simpler solutions are also conceivable, using high-ohm, voltage resistant resistors for the connection between the control unit and the electric fence, but then the capacitor (C1) will require longer charging times.

The actuator (L1) can be realized in a variety of ways depending on the type of feed mechanism. Examples of practicable actuators are electromagnets, electric motors, or so called permanent electromagnets, the latter being a permanent magnet combined with a coil having the ability temporarily to put out the magnetism. In turn, the actuators may be arranged on a variety of different automatic feed dispensers, one example being a container hanging above a manger with a lid that opens as the actuator is activated. Yet another example is that a special, separated, enclosed pasture that is provided with feed, has been provided with a gate mechanism that opens by the actuator. Yet another example is a blocked, spring-operated throwing machine that throws feed over the fence as the actuator releases the lock.

## Claims

1. An arrangement for activating an automatic feed dispenser for grazing animals in enclosed pastures provided with an electric fence (F), which electric fence (F) is supplied via a high-voltage outlet of an electric unit (D) by repetitive voltage pulses, comprising a system with an actuator (L1) and a control unit (K) for activation of the automatic feed dispenser (G, H), **characterized in that** said control unit (K) is connected to the electric fence (F) and is provided with detection means (IC2) arranged to detect a deviation in the supply from said electric unit (D), and at a predetermined detection of deviation in said repetitive voltage pulses to activate said actuator (L1).

2. An arrangement according to claim 1, **characterized in that** said system comprises a capacitor (C1) arranged by connection to the electric fence (F) to extract the power required to activate the actuator (L1).

3. An arrangement according to claim 1, **characterized in that** the actuator (L 1) is an electromagnet.

4. An arrangement according to claim 1, **characterized in that** the actuator (L 1) is an electric motor.
